# EUROPÄISCHE PATENTSCHRIFT

(11) **EP 0 985 812 B1**
(45) Veröffentlichungstag und Bekanntmachung des Hinweises auf die Patenterteilung: **28.06.2006**
(21) Anmeldenummer: 99115080.6
(22) Anmeldetag: 05.08.1999
(51) Int. Cl.: F02D 21/08, F02B 47/08

(54) **Optimierung des Frischluftfüllungsverhaltens einer Brennkraftmaschine**
Optimalisation of the part of the fresh air in the charge of a combustion engine
Optimalisation de la quantité d'air frais dans la charge d'un moteur à combustion

(30) Priorität: 12.09.1998 DE 19841836
(43) Veröffentlichungstag der Anmeldung: 15.03.2000
(73) Patentinhaber: Volkswagen Aktiengesellschaft, 38436 Wolfsburg (DE)
(72) Erfinder: Nitzke, Hans-Georg, 38547 Wettmershagen (DE); Rebohl, Thorsten, 38100 Braunschweig (DE)
(74) Vertreter: Banzer, Hans-Jörg

(56) Entgegenhaltungen:
- EP-A- 1 024 261
- DE-A- 4 443 651
- DE-A- 19 628 235
- JP-A- 10 122 059
- US-A- 5 209 214
- US-A- 5 381 775
- US-A- 5 533 489

## Beschreibung

Die Erfindung betrifft die Optimierung des Frischluftfüllungsverhaltens einer Brennkraftmaschine und insbesondere die Optimierung des Frischluftfüllungsverhaltens von turboaufgeladenen Dieselmotoren mit Abgasrückführung.

Bei dynamischen Untersuchungen von Brennkraftmaschinen mit Abgasrückführung (AGR), insbesondere von turboaufgeladenen Dieselmotoren, zeigt sich in bestimmten Betriebspunkten des Motors ein schlechtes Frischluftfüllungsverhalten. Der sich ergebende "Luftmangel" bewirkt eine erhöhte Rußemission und ein schlechteres Ansprechverhalten des Motors bei Beschleunigungsvorgängen und gleichzeitig aktiver Abgasrückführung.

Die Druckschrift US-A-5 381 775 betrifft ein System zum Regeln des Betriebes eines Verbrennungsmotors. Dabei schließt ein System bei einer Beschleunigung ein Abgasrückführungsventil sofort. Das sofortige Schließen des Abgasrückführungsventils geschieht dabei über eine Vorsteuerung, welche durch ein DT1-Element 535 und einen asymmetrischen Verstärker 540 gebildet wird. Die Eingangsgröße dieser Vorsteuerung ist eine ausgewählte Benzineinspritzmenge QK.

Die Druckschrift DE 44 43 651 A beschreibt eine Vorrichtung und ein Verfahren zur Steuerung einer Brennkraftmaschine, insbesondere einer selbst zündenden Brennkraftmaschine. In Fig. 2 dieser Druckschrift ist ein Blockdiagramm einer Abgasrückführsteuerung dargestellt. Ein Luftmengensollwert MLS gelangt zu einem Abgasrückführkennfeld 210 und zu einem Verknüpfungspunkt 204. Zu dem Abgasrückführkennfeld 210 gelangt zusätzlich ein Drehzahlsignal N sowie das Kraftstoffmengensignal QK. Am zweiten Eingang des Verknüpfungspunktes 204 liegt das Ausgangsignal eines Istwertgebers 206, d. h. einem Luftmengenistwert, an. Der Ausgang des Verknüpfungspunktes 204 ist wiederum mit einem Regler 208 verbunden. Der Regler beaufschlagt den zweiten Eingang eines Verknüpfungspunktes 310 mit einem Signal, wobei der Regler 208 vorzugsweise einen Proportionalanteil und einen Integralanteil beinhaltet, wie es für eine Regelung einer Abgasrückführsteuerung bei normalen Betriebsphasen Stand der Technik ist. Um eine möglichst schnelle Änderung der Abgasrückführrate bei einem sich ändernden Luftmengensollwert MLS gewährleisten zu können, ist vorgesehen, dass der Luftmengensollwert MLS unmittelbar dem Abgasrückführkennfeld 210 zugeführt wird. Dieser Zweig dient als Vorsteuerung. Am Ausgang des Abgasrückführkennfeldes 210 liegt eine erste Hubgröße H1 an. Die erste Hubgröße H1 wird in einem Verknüpfungspunkt 310 mit der zweiten Hubgröße H2 des Reglers 208 verknüpft.

Die Druckschrift US-A-5 533 489 offenbart ein Steuerungssystem zur Steuerung der Abgasrückführung bei einem Verbrennungsmotor. Dabei wird der Ausgang eines Drosselpositionssensors als Eingang für zwei parallele Filter verwendet.

Die Druckschrift JP 10 122 059 beschreibt eine Steuerung eines Abgasrückführventils, welche eine Öffnungsposition des Abgasrückführventils steuert. Dabei umfasst die Steuerung ein Steuerungsteil 65, welchem eine tatsächliche Öffnungsposition zusätzlich zur Soll-Öffnungsposition des Abgasrückführventils zugeführt wird.

Der Erfindung liegt daher die Aufgabe zugrunde, ein Verfahren und eine Vorrichtung zur Regelung des Frischluftmassenwertes von Brennkraftmaschinen mit Abgasrückführung zu schaffen, wodurch ein besseres Ansprechverhalten der Brennkraftmaschine bei Beschleunigungsvorgängen erzielt wird.

Die Aufgabe wird durch die Merkmale der Ansprüche 1 und 3 gelöst. Bevorzugte Ausgestaltungen der Erfindung sind Gegenstand der Unteransprüche.

Die vorliegende Erfindung betrifft ein Verfahren zur Regelung des Frischluftmassenwertes von Brennkraftmaschinen mit Abgasrückführung, in dem das Abgasrückführventil in Beschleunigungsphasen beschleunigt geschlossen wird.

Dadurch, daß die Abgasrückführung in der Beschleunigungsphase schnell geschlossen wird, wird das Frischluftfüllungsverhalten verbessert. Die Rußemission wird verringert und das Ansprechverhalten des Motors bei Beschleunigungsvorgängen verbessert.

Dabei wird das beschleunigte Schließen des Abgasrückführventils durch eine dynamische Vorsteuerung erreicht. Die dynamische Vorsteuerung erfolgt ferner parallel zur Abgasrückführregelung. Die Vorsteuerung des Abgasrückführventils weist ein Modell auf, durch das die Vorsteuerparameter, die das zeitliche Verhalten der Vorsteuerungen bestimmen, in Abhängigkeit mehrerer Eingangsgrößen verändert werden. Vorzugsweise wird das Modell durch ein verzögertes Differenzierglied realisiert. Ferner verwendet das dynamische Modell die Differenz zwischen der Soll-Luftmasse und der Ist-Luftmasse als Eingangsparameter.

Vorteilhafterweise ist bei dem dynamischen Modell, daß Soll- und Ist-Luftmasse idiell in die Regelung eingehen. Dadurch ist es nochmal möglich die Rußemession herabzusetzen und das Ansprechverhalten des Motors zu idiellisieren. Grund dafür ist, daß die Dynamik eine ständige Werteüberwachung von Ist- und Sollwert vornimmt.

Weiterhin betrifft die vorliegende Erfindung eine Vorrichtung zur Regelung des Frischluftfüllungsverhaltens einer Brennkraftmaschine mit Abgasrückführung und einem Abgasrückführregler, in der die Vorrichtung ein Modul zur dynamischen Vorsteuerung aufweist, das parallel zum Abgasrückführregler angeordnet ist, wobei die Signale des Abgasrückführreglers und der dynamischen Vorsteuerung zur Regelung des Abgasrückführventils miteinander verknüpft werden.

Ferner beinhaltet die dynamische Vorsteuerung der erfindungsgemäßen Vorrichtung ein Modell, das die Differenz der Solluftmasse und der Ist-Luftmasse als Eingangsparameter verwendet. Ferner berechnet das Modell die Vorsteuerparameter, die das zeitliche Verhalten der Vorsteuerung bestimmen, wobei das Modell weitere dynamische Eingangsgrößen, nämlich Einspritzmenge, zeitliche Änderung der Einspritzmenge, Drehzahl und/oder Position des AGR-Ventils beinhaltet. Vorzugsweise wird die Solluftmasse durch ein Kennfeld bestimmt, im einfachsten Fall wird die dynamische Vorsteuerung von einem verzögerten Differenzierglied gebildet.

Ferner wird die erfindungsgemäße Vorrichtung in einem turboaufgeladenen Dieselmotor mit Abgasrückführung verwendet.

Weiterhin wird das erfindungsgemäße Verfahren zur Regelung der Frischluftbefüllung in einem turboaufgeladenen Dieselmotor mit Abgasrückführung verwendet.

Eine bevorzugte Ausführungsform der Erfindung ist nachfolgend anhand der Zeichnungen dargestellt.
Fig. 1 zeigt ein schematisches Blockdiagramm der dynamischen Steuerung des Abgasrückführventils, und
Fig. 2 zeigt ein ausführliches Blockdiagramm einer Schaltung zur Ansteuerung des Abgasrückführventils.

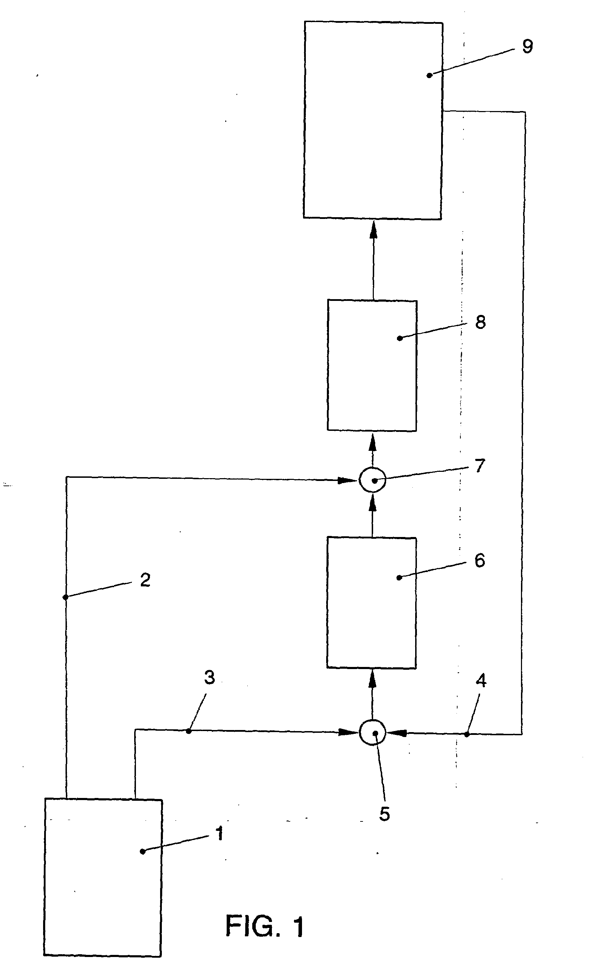

Fig. 1 zeigt das Prinzip der direkten Vorsteuerung des Abgasrückführventils über ein Modell. In einem Modell 1 des Motors, das gleichzeitig als Modell für das Abgasrückführventil 3 dient, wird ein Signal 2 zur Vorsteuerung des Abgasrückführventils abgeleitet. Aus dem Füllungsmodell werden ferner ein Sollwert 3 für Lambda oder für die Luftmasse im Zylinder ermittelt, die in einem Subtrahierer 5 mit dem Ist-Wert 4 für Lambda oder die Luftmasse im Zylinder verknüpft wird. Das Differenzsignal ist Eingangsgröße eines Abgasrückführreglers 6. Das Ausgangssignal des Abgasrückführreglers 6 wird mit dem Signal zur Steuerung des Abgasrückführventils in einer Einheit 7 verknüpft und das verknüpfte Steuersignal steuert das Abgasrückführventil 8, das auf den Motor- und Abgastrakt 9 wirkt.

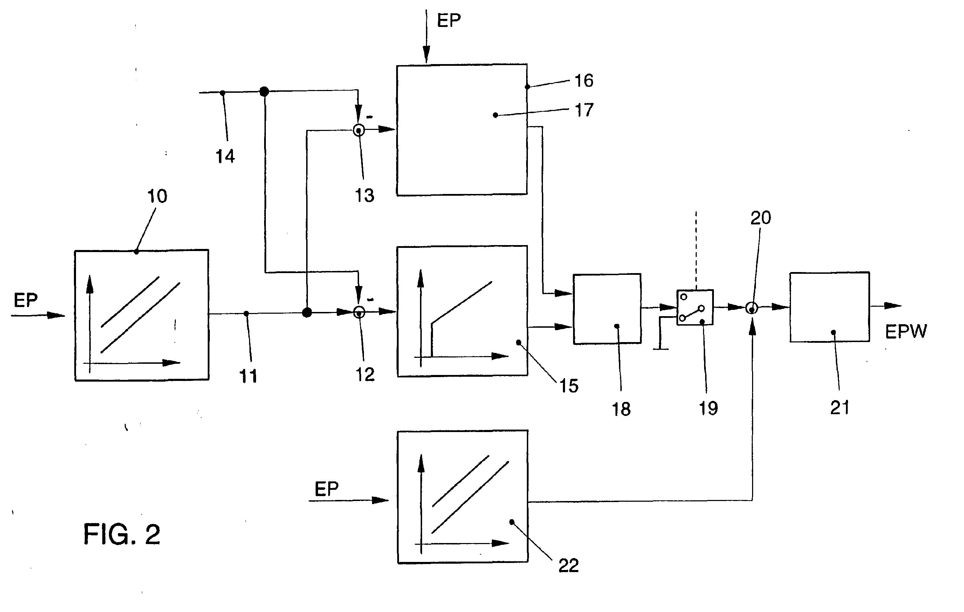

Fig. 2 zeigt die Schaltung zur Ansteuerung des Abgasrückführventils 8. Aus Kennfeldern 10, die als Eingangsparameter EP Drehzahl, Einspritzmenge, Atmosphärendruck, Lufttemperatur und Wassertemperatur beispielsweise aufweisen, wird eine Solluftmasse 11 ermittelt. Diese Solluftmasse 11 ist Eingangsgröße zweier Subtrahierer 12 und 13, in der sie mit der Ist-Luftmasse 14 im Zylinder zu einer Differenz verknüpft wird. Diese Luftmassendifferenz wird einerseits in einen PI-Regler 15 und eine dynamische Vorsteuerung 16 gegeben. Der PI-Regler 15 ermittelt aus der Luftmassendifferenz ein Steuersignal für das Abgasrückführventil. In der dynamischen Vorsteuerung 16, die ein Modell 17 beinhaltet, dessen Eingangsparameter EP die Einspritzmenge, die zeitliche Änderung der Einspritzmenge, die Position des Abgasrückführventils und die Drehzahl sein können, wird ein Vorsteuersignal für das Abgasrückführventil ermittelt. Das Vorsteuersignal und das Regelsignal für die Abgasrückführung werden in einer Signalverknüpfung 18 miteinander verknüpft, und über eine Abschaltung 19 auf eine Verknüpfung 20 gegeben, wo das Steuersignal für die Abgasrückführung mit dem aus Kennfeldern 22 ermittelten Steuersignal verknüpft wird, wobei die Kennfelder 22 Eingangsparameter EP wie Drehzahl, Einspritzmenge, Atmophärendruck und Wassertemperatur aufweisen. Mittels einer Begrenzungsvorrichtung 21 werden die Signale zur Ansteuerung des Abgasrückführventils begrenzt und als Tastverhältnis EPW dem Abgasrückführventil zugeführt.

### BEZUGSZEICHENLISTE

- 1: Modell
- 2: Vorsteuerung des Abgasrückführventils
- 3: Sollwert für Lambda oder Luftmasse im Zylinder
- 4: Ist-Wert für Lambda oder Luftmasse im Zylinder
- 5: Subtrahierer
- 6: Abgasrückführregler
- 7: Verknüpfung
- 8: Abgasrückführventil
- 9: Motor- und Abgastrakt
- 10: Kennfeldvorrichtung
- 11: Soll-Luftmasse
- 12: Subtrahierer
- 13: Subtrahierer
- 14: Ist-Luftmasse
- 15: PI-Regler
- 16: dynamische Vorsteuerung
- 17: Modell
- 18: Signalverknüpfung
- 19: Abschalter
- 20: Verknüpfung
- 21: Begrenzer
- 22: Kennfelder
- EP: Eingangsparameter
- EPW: Tastverhältnis EPW

## Patentansprüche

1. Verfahren zur Regelung des Frischluftmassenwertes von Brennkraftmaschinen mit Abgasrückführung, wobei ein Abgasrückführventil (8) in Beschleunigungsphasen durch eine dynamische Vorsteuerung (16) beschleunigt geschlossen wird, welche parallel zu einer Abgasrückführregelung erfolgt, **dadurch gekennzeichnet, dass** die dynamische Vorsteuerung (8) ein Modell (1) aufweist, welches Vorsteuerparameter, welche ein zeitliches Verhalten der dynamischen Vorsteuerung (16) bestimmen, in Abhängigkeit mehrerer Eingangsgrößen verändert, wobei das dynamische Modell eine Differenz zwischen einer Sollluftmasse (3, 11) und einer Ist-Luftmasse (4, 14) als Eingangsparameter verwendet.

2. Verfahren nach Anspruch 1, **dadurch gekennzeichnet, dass** das Modell (1) ein verzögertes Differenzglied ist.

3. Vorrichtung zur Regelung des Frischluftfüllungsverhaltens einer Brennkraftmaschine (9) mit Abgasrückführung und einem Abgasrückführungsregler (6, 15), wobei die Vorrichtung ein Modul (16) zur dynamischen Vorsteuerung aufweist, welches parallel zum Abgasrückführungsregler (6, 15) angeordnet ist, und wobei die Signale des Abgasrückführreglers (6, 15) und der dynamischen Vorsteuerung (1, 16) zur Regelung des Abgasrückführungsventils miteinander verknüpft werden, **dadurch gekennzeichnet, dass** die dynamische Vorsteuerung (16) ein Modell (17) beinhaltet, welches eine Differenz einer Sollluftmasse (11) und einer Ist-Luftmasse (14) als Eingangsparameter verwendet.

4. Vorrichtung nach Anspruch 3, **dadurch gekennzeichnet, dass** das Modell (17) die Vorsteuerparameter berechnet, die das zeitliche Verhalten der Vorsteuerung bestimmt, wobei das Modell weitere dynamische Eingangsgrößen, nämlich Einspritzmenge, zeitliche Änderung der Einspritzmenge, Drehzahl und/oder Position des AGR-Ventils beinhaltet.

5. Vorrichtung nach Anspruch 3 oder 4, **dadurch gekennzeichnet, dass** die Soll-Luftmasse (11) aus Kennfeldern (10) bestimmt wird.

6. Vorrichtung nach einem der Ansprüche 3 bis 5, **dadurch gekennzeichnet, dass** die dynamische Vorsteuerung (16) von einem verzögerten Differenzierglied gebildet wird.

7. Verwendung der Vorrichtung nach einem der Ansprüche 3 bis 6 in einem turboaufgeladenen Dieselmotor mit Abgasrückführung.

8. Verwendung des Verfahrens zur Regelung des Frischluftmassenwerts nach Anspruch 1 oder 2 in einem turboaufgeladenen Dieselmotor mit Abgasrückführung.

## Claims

1. Method for regulating the fresh air mass charge of internal combustion engines having exhaust gas recirculation, the closing of an exhaust gas recirculation valve (8) in acceleration phases being speeded up by a dynamic pilot control (16) operating in parallel with an exhaust gas recirculation control, **characterized in that** the dynamic pilot control (8) has a model (1), which adjusts pilot control parameters, which determine a timing of the dynamic pilot control (16), as a function of multiple input variables, the dynamic model using a difference between a set-point air mass (3, 11) and an actual air mass (4, 14) as input parameter.

2. Method according to Claim 1, **characterized in that** the model (1) is a delayed differential element.

3. Device for regulating the fresh air quantity in the charge of an internal combustion engine (9) having exhaust gas recirculation and an exhaust gas recirculation regulator (6, 15), the device having a dynamic pilot control module (16) which is arranged in parallel with the exhaust gas recirculation regulator (6, 15), and the signals from the exhaust gas recirculation regulator (6, 15) and the dynamic pilot control (1, 16) being interconnected for regulating the exhaust gas recirculation valve, **characterized in that** the dynamic pilot control (16) contains a model (17), which uses a difference between a set-point air mass (11) and an actual air mass (14) as input parameter.

4. Device according to Claim 3, **characterized in that** the model (17) calculates the pilot control parameters which determine the timing of the pilot control, the model containing further dynamic input variables, that is to say the fuel injection quantity, the variation in the fuel injection quantity over time, the engine speed and/or the position of the EGR valve.

5. Device according to Claim 3 or 4, **characterized in that** the set-point air mass (11) is determined from characteristics maps (10).

6. Device according to any one of Claims 3 to 5, **characterized in that** the dynamic pilot control (16) is formed by a delayed differential element.

7. Use of the device according to any one of Claims 3 to 6 in a turbocharged diesel engine having exhaust gas recirculation.

8. Use of the method for regulating the fresh air mass charge according to Claim 1 or 2 in a turbocharged diesel engine having exhaust gas recirculation.

## Revendications

1. Procédé de régulation du débit massique d'air frais de moteurs à combustion interne avec recyclage des gaz d'échappement, dans lequel une soupape de recyclage des gaz d'échappement (8) est fermée de façon accélérée, dans des phases d'accélération, par un pilotage dynamique (16) qui est effectué parallèlement à une régulation du recyclage des gaz d'échappement, **caractérisé en ce que** le pilotage dynamique (8) comprend un modèle (1), qui modifie des paramètres de pilotage, qui déterminent un comportement temporel du pilotage dynamique (16), en fonction de plusieurs grandeurs d'entrée, dans lequel le modèle dynamique utilise une différence entre une masse d'air de consigne (3, 11) et une masse d'air réelle (4, 14) comme paramètre d'entrée.

2. Procédé selon la revendication 1, **caractérisé en ce que** le modèle (1) est un organe différentiel temporisé.

3. Dispositif de régulation de la quantité d'air frais dans la charge d'un moteur à combustion interne (9) avec recyclage des gaz d'échappement et un régulateur de recyclage des gaz d'échappement (6, 15), dans lequel le dispositif comprend un module (16) pour le pilotage dynamique qui est disposé parallèlement au régulateur de recyclage des gaz d'échappement (6, 15), et dans lequel les signaux du régulateur de recyclage des gaz d'échappement (6, 15) et du pilotage dynamique (1, 16) sont combinés les uns aux autres pour la régulation de la soupape de recyclage des gaz d'échappement, **caractérisé en ce que** le pilotage dynamique (16) contient un modèle (17), qui utilise une différence entre une masse d'air de consigne (11) et une masse d'air réelle (14) comme paramètre d'entrée.

4. Dispositif selon la revendication 3, **caractérisé en ce que** le modèle (17) calcule les paramètres de pilotage, que le comportement temporel du pilotage détermine, dans lequel le modèle contient d'autres grandeurs d'entrée dynamiques, notamment la quantité injectée, la variation temporelle de la quantité injectée, la vitesse de rotation et/ou la position de la soupape de recyclage des gaz d'échappement.

5. Dispositif selon la revendication 3 ou 4, **caractérisé en ce que** la masse d'air de consigne (11) est déterminée à partir de diagrammes caractéristiques (10).

6. Dispositif selon l'une quelconque des revendications 3 à 5, **caractérisé en ce que** le pilotage dynamique (16) est formé par un organe différentiel temporisé.

7. Utilisation du dispositif selon l'une quelconque des revendications 3 à 6 dans un moteur diesel turbo suralimenté avec recyclage des gaz d'échappement.

8. Utilisation du procédé de régulation du débit massique d'air frais selon la revendication 1 ou 2 dans un moteur diesel turbo suralimenté avec recyclage des gaz d'échappement.
